Europäisches Patentamt
European Patent Office
Office européen des brevets

(19)

(11) Veröffentlichungsnummer: **0 030 661**
**A2**

(12) # EUROPÄISCHE PATENTANMELDUNG

(21) Anmeldenummer: 80107421.2

(22) Anmeldetag: 27.11.80

(51) Int. Cl.³: A 01 N 57/12
C 07 F 9/173

(30) Priorität: 07.12.79 DE 2949391

(43) Veröffentlichungstag der Anmeldung: 24.06.81 Patentblatt 81/25

(84) Benannte Vertragsstaaten: AT BE CH DE FR GB IT LI NL SE

(71) Anmelder: BAYER AG
Zentralbereich Patente, Marken und Lizenzen
D-5090 Leverkusen 1, Bayerwerk(DE)

(72) Erfinder: Arend, Günter, Dr.
Claudiusstrasse 42
D-4047 Dormagen 1(DE)

(72) Erfinder: Behrenz, Wolfgang, Dr.
Untergruendemich 14
D-5063 Overath(DE)

(54) **Insektizide und akarizide Mittel enthaltend Propargylthionophosphorsäureester.**

(57) Die Erfindung betrifft neue insektizide und akarizide synergistische Wirkstoffkombinationen aus teilweise bekannten phosphorhaltigen Verbindungen der Formel

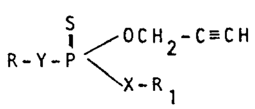

in welcher

R und $R_1$ unabhängig voneinander einen Alkyl-, Alkenyl- oder Alkinylrest mit 1 bis 4 C-Atomen und

X und Y Sauerstoff oder Schwefel bedeuten

und anderen pestiziden Wirkstoffen.

EP 0 030 661 A2

BAYER AKTIENGESELLSCHAFT
Zentralbereich
Patente Marken und Lizenzen

5090 Leverkusen-Bayerwerk

Ad/ABc
Typ III

Insektizide und akarizide Mittel enthaltend Propargyl-thionophosphorsäureester

Die Erfindung betrifft neue insektizide und akarizide synergistische Wirkstoffkombinationen aus teilweise bekannten phosphorhaltigen Verbindungen und pestiziden Wirkstoffen.

Es ist bereits bekannt geworden, daß die folgenden Wirkstoffe bzw. Wirkstoffgruppen pestizide, insbesondere insektizide und akarizide Eigenschaften aufweisen:

A. Carbamate, wie z.B. das 2-iso-Propyl-phenyl-N-methylcarbamat, 2-(1-Methyl-allyl)-phenyl-n-methylcarbamat, 3-iso-Propyl-4-methoxy-phenyl-N-methylcarbamat, 2-/1,3-Dioxolan(2)yl-phenyl/-N-methylcarbamat, 2,2-Dimethyl-1,3-benzodioxol(4)yl-N-methylcarbamat, 2,2-Dimethyl- bzw. 2-Methyl-2,3-dihydrobenzofuran(4)yl-N-methyl-carbamat und 2,3-Dihydro-2,2-dimethylbenzofuran( )yl-N-acetyl-N-methylcarbamat, 3,4,5-Trimethyl-phenyl-N-methylcarbamat, 1-Naphthyl-N-methyl-carbamat.



BAD ORIGINAL

B. Carbonsäureester, wie z.B. 2,3,4,5-Tetrahydrophthalimidomethyl-chrysanthema-Essigsäure-2,2,2-trichlor-1-(3,4-dichlorphenyl)-ethylester und [3-Phenoxybenzyl]-2,2-dimethyl-3-(2,2-dichlorvinyl)-cyclopropancarboxylat.

C. Phosphorsäureester, wie z.B. O,O-Dimethyl-O-(2,2-dichlorvinyl)-phosphorsäureester und O,O-Dimethyl-O-[3-methyl-4-methylthio-phenyl]-thionophosphorsäureester

D. Halogencycloalkane, wie z.B. Hexachlorcyclohexan und

E. Halogenalkane, wie z.B. 1,1,1-Trichlor-2,2-bis-(4-methoxyphenyl)-ethan.

Weiterhin sind synergistische Mischungen von Carbamaten, z.B. 2-iso-Propoxyphenyl-N-methoxylcarbamat oder von Phosphorsäureestern, z.B. O,O-Diethyl-O-(2-isopropyl-4-methyl-pyrimidinyl-[6]-phosphorthioat, oder von natürlichen oder synthetischen Pyrethroiden mit Piperonylethern, wie z.B. α-[2-(2-Butoxy-ethoxy)-ethoxy]-4,5-methylendioxy-2-propyl-toluol, bekannt (vgl. Bull, Org.-Health Org. 1966, 35, Seiten 691-708, Schrader, G.: Die Entwicklung neuer insektizider Phosphorsäureester 1963, S. 158; Perkov, W.: Die Insektizide, 1966, Seiten 516-524). Die Wirksamkeit dieser Synergisten ist nicht befriedigend, eine gewisse Bedeutung hat nur das α-[2-(2-Butoxy-ethoxy)ethoxy]-4,5-methylendioxy-2-propyl-toluol (Piperonylbutoxyd) erlangt.

In der europäischen Patentanmeldung 78 100 117.7 sind Phosphorverbindungen der allgemeinen Formel I

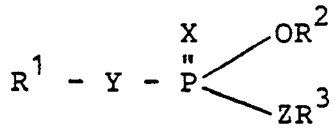 I

in welcher

$R^1$, $R^2$ und $R^3$ unabhängig voneinander für die Reste Alkyl, Alkenyl oder Aryl stehen, welche gegebenenfalls substituiert sein können, wobei mindestens einer der Reste für einen in 2-Stellung ungesättigten, gegebenenfalls substituierten Alkenylrest steht,

X für Sauerstoff oder Schwefel steht,

Y und Z unabhängig voneinander für Sauerstoff, Schwefel oder eine einfache Bindung stehen; stehen sowohl Y als auch Z für Sauerstoff oder für Schwefel oder für eine einfache Bindung, so können $R^1$ und $R^2$ und $R^3$ zusätzlich zu den oben angegebenen Resten Propargyl bedeuten;

als synergistisch wirksame Verbindungen beschrieben. Es wurde nun gefunden, daß die in europäischen Patentanmeldung 78 100 177.7 nicht näher beschriebenen Verbindungen der allgemeinen Formel II,

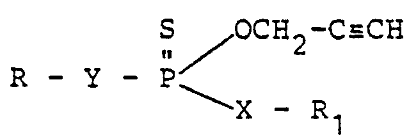 II

in welcher

R und $R_1$ unabhängig voneinander einen Alkyl-, Alkenyl- oder Alkinylrest mit 1 bis 4 C-Atomen und

X und Y Sauerstoff oder Schwefel bedeuten,

besonders gut wirksame Synergisten darstellen.

Gegenstand der Erfindung sind somit Wirkstoffkombinationen aus propargylgruppenhaltigen Thionophosphorsäureestern der allgemeinen Formel II und

A. Carbamaten der allgemeinen Formel III

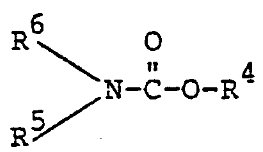

III

in welcher

$R^4$ für Aryl, Heterocyclus oder einen Oximrest steht,

$R^5$ für Wasserstoff oder Alkyl mit 1 bis 4 C-Atomen steht und

$R^6$ für Alkyl, Alkylcarbonyl mit 1 - 6 C-Atomen im Alkylrest, der gegebenenfalls auch durch Hydroxy oder Methylthio substituiert sein kann, oder den Rest -S-W, steht, wobei für einen gegebenenfalls durch Halogen substituierten aliphatischen Rest mit 1 bis 4 C-Atomen, insbe-

sondere $CCl_3$ und $CF_3$, sowie für gegebenenfalls bevorzugt durch CN, Halogen, insbesondere Chlor, Methyl, Trihalogenmethyl, Trifluormethylmercapto oder $NO_2$ substituierten Arylrest, insbesondere Phenyl, oder für Methoxycarbonyl oder für den Rest $V-SO_2-N- R^5$ steht, wobei V für Alkyl, Halogenalkyl oder Halogen, Trihalogenmethyl, CN, Methyl oder Nitro substituierten Arylrest steht;

besonders bevorzugt sind Carbamate, in denen

$R^4$ für Phenyl oder Naphthyl steht, die gegegebenenfalls substituiert sind durch Alkyl, Alkenyl, Alkoxy, Alkylmercapto mit jeweils 1 bis 5 C-Atomen, Dialkylamino, Dialkenylamino bis zu 3 C-Atomen je Alkyl- bzw. Alkenylteil, Halogen, insbesondere Chlor, Dioxolanyl oder den Rest $-N=CH-N\ (C_{1-4}\text{-Alkyl})_2$;

weiterhin sind besonders bevorzugt Carbamate, in denen

$R^4$ für 2,3-Dihydrobenzofuranyl, Benzodioxol, Benzothienyl, Pyrimidyl oder Pyrazolyl steht, die gegebenenfalls durch $C_1$-$C_4$-Alkyl, insbesondere Methyl oder Dialkylamino mit 1 bis 4 C-Atomen je Alkylteil substituiert sind;

weiterhin sind besonders bevorzugt Carbamate, in denen $R^4$ für einen Oximrest der allgemeinen Formel (IIIa)

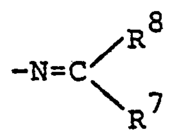

(IIIa)

steht,

in welcher

$R^7$ und $R^8$ gleich oder verschieden sind und für Alkyl, Cycloalkyl, Alkenyl, Alkinyl, Alkoxy, Alkylmercapto, Alkoxycarbonyl, Carbonylamid, Alkylmercaptoalkyl mit jeweils bis zu 5 C-Atomen, CN, Aryl, insbesondere Phenyl, Aralkyl, einen gegegebenenfalls substituierten heterocyclischen Rest oder für Alkyl, das durch einen heterocyclischen Rest substituiert ist, stehen oder gemeinsam für einen gegebenenfalls durch $C_1$-$C_4$-Alkyl substituierten Dioxolanyl oder Dithiolanylrest stehen;

B. Carbonsäureestern der allgemeinen Formel (IV)

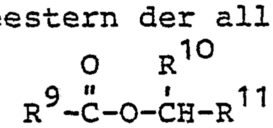

(IV)

in welcher

$R^9$ für Alkyl, Aralkyl, Aryl oder Cycloalkyl steht, die gegebenenfalls substituiert sein können und

$R^{10}$ für Wasserstoff, Alkyl, Halogenalkyl, Alkenyl, Alkinyl, CN steht und

$R^{11}$ für Aryl oder einen Heterocyclus steht, oder gemeinsam mit $R^{10}$ einen gegebenenfalls substituierten Cyclopentenonring bildet;

besonders bevorzugt sind Carbonsäureester, in denen
$R^9$ für Alkyl mit 1 bis 6 C-Atomen, das gegebenenfalls durch gegebenenfalls halogensubstituiertes Phenyl substituiert sind, Cyclopropyl, das gegebenenfalls durch Alkyl, Alkenyl, Halogenalkyl oder Halogenalkenyl mit jeweils bis zu 6 C-Atomen substituiert ist oder für Phenyl, das gegebenenfalls durch Halogen substituiert ist, steht,

bevorzugt sind Carbonsäureester, in denen
$R^{10}$ für Wasserstoff, Alkyl mit 1 bis 6 C-Atomen, Halogenalkyl mit 1 bis 4 C-Atomen und bis zu 3 Halogenatomen, CN oder Ethinyl steht;

weiterhin sind besonders bevorzugt Carbonsäureester, in denen
$R^{11}$ für Phenyl steht, das gegebenenfalls durch $C_{1-4}$-Alkyl, Halogen, insbesondere Fluor oder Chlor, gegebenenfalls halogen- oder methylsubstituiertes Phenoxy, gegebenenfalls substituiertes Benzyl substituiert ist, ferner für Furanyl. Tetrahydrophthalimido, Benzodioxol, die gegebenenfalls durch Halogen, insbesondere Chlor, Alkyl der Alkenyl mit bis zu 4 C-Atomen oder Benzyl substituiert sind, steht und ferner für Cyclopentenon steht, das gegebenenfalls durch $C_{1-4}$-Alkyl, Furfuryl $C_{1-5}$-Alkenyl substituiert ist;

weiter sind besonders bevorzugt die natürlichen Pyrethroide;

C. Phosphorsäureestern der allgemeinen Formel (V)

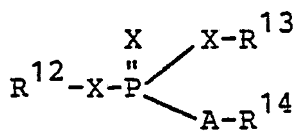

(V)

in welcher

X unabhängig voneinander für O oder S stehen und

A für O,S, NH- oder für eine direkte Bindung zwischen dem zentralen P-Atom und dem Rest $R^{14}$ steht und

$R^{12}$ und $R^{13}$ gleich oder verschieden sind und für Alkyl oder Aryl stehen und

$R^{14}$ für Alkyl, Aryl, Heteroaryl, Aralkyl, Alkenyl, Dioxanyl oder einen Oximrest oder für den gleichen Rest steht, an das es gebunden ist.

Besonders bevorzugt sind Phosphorsäureester, in denen

$R^{12}$ und $R^{13}$ gleich oder verschieden sind und für $C_{1-4}$-Alkyl oder Phenyl stehen und

$R^{14}$ für Alkyl mit 1-4 C-Atomen steht, das gegebenenfalls durch Halogen, OH, CN, gegebenenfalls halogensubstituiertes Phenyl, Carbonylamid, Sulfonylalkyl, Sulfoxyalkyl, Carbonylalkyl, Alkoxy, Alkylmercapto, Alkoxycarbonyl substituiert ist; für Alkenyl mit bis zu 4 C-Atomen steht, das gegebenenfalls durch Halogen, gegebenenfalls halogensubstituiertes Phenyl oder Alkoxycarbonyl substituiert ist, oder für den Oximrest der allgemeinen Formel (IIIa) steht,

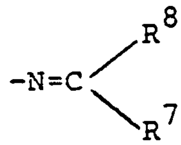

(IIIa)

wobei

$R^7$ und $R^8$ die oben angegebene Bedeutung besitzen, insbesondere jedoch für Cyan oder Phenyl stehen, oder für Dioxanyl steht, das durch denselben Rest substituiert ist, an den $R^{14}$ gebunden ist, oder $R^{14}$ steht für den gleichen Rest, an den es gebunden ist, oder $R^{14}$ steht für Phenyl, das gegebenenfalls durch Methyl, Nitro, CN, Halogen, Methylmercapto substituiert ist;

$R^{14}$ steht außerdem besonders bevorzugt für gegebenenfalls durch $C_{1-4}$-Alkyl oder Halogen substituierte Heteroaromaten wie Pyridin, Chinolin, Chinoxalin, Pyrimidin, Diazinon, Benzo-1,2,4-triazin;

D. Cycloalkane der Formel (VI)

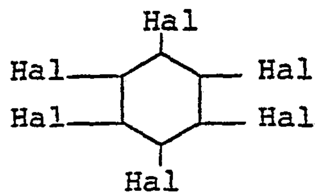

(VI)

in welcher

Hal, Halogen, vorzugsweise Chlor bedeutet;

E. Halogenalkanen der Formel (VII)

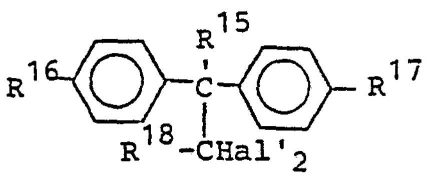

(VII)

in welcher

Hal' für Chlor oder Brom

$R^{15}$ für Wasserstoff oder Hydroxyl

$R^{16}$ und $R^{17}$ gleich oder verschieden sind und für Halogen, Alkyl oder Alkoxy und

$R^{18}$ für Wasserstoff oder Halogen stehen;

besonders bevorzugt sind Halogenalkane, in denen

$R^{15}$ Wasserstoff oder Hydroxyl bedeutet,

$R^{16}$ und $R^{17}$ für gleiches Halogen, Alkyl bzw. Alkoxy mit 1 bis 4 Kohlenstoffatomen je Alkyl bzw. Alkoxyrest stehen und

$R^{18}$ Halogen bedeutet.

Die insektizide und/oder akarizide Wirkung der erfindungsgemäßen Wirkstoffkombinationen ist wesentlich höher als die Wirkung der Einzelkomponente bzw. die Summe der Wirkungen der Einzelkomponenten. Sie ist ferner wesentlich höher als die Wirkung der bereits bekannten und praktischen Wirkstoffkombinationen aus 2-iso-Propoxy-phenyl-N-methyl-carbamat und Piperonylbutoxyd. Außerdem zeigen die erfindungsgemäß als Synergisten verwendbaren phosphorhaltigen Verbindungen ausgezeichnete synergistische Wirksamkeit nicht nur bei einer Wirkstoffklasse, sondern bei Wirkstoffen aus den verschiedensten chemischen Stoffgruppen.

Somit stellen synergistische Mischungen, die die erfindungsgemäß verwendbaren phosphorhaltigen Verbindungen der Formel II enthalten, eine wertvolle Bereicherung der Technik dar.

Die Verbindungen der allgemeinen Formel II sind bisher in der Literatur nicht vorbeschrieben. Sie sind daher ein weiterer Gegenstand der Erfindung. Man stellt sie vorzugsweise durch Umsetzung der Thionophosphorsäure(ester)chloride mit Propargylalkohol her. Dabei erweisen sich die literaturbekannten Methoden unter Verwendung tertiärer Amine als Säurefänger als nur wenig brauchbar, wie beispielsweise bei der Herstellung von Synergist 2 gezeigt wird.

Eine bevorzugte Synthese für die Verbindungen der allgemeinen Formel II besteht in der Umsetzung des entsprechenden Thionophosphorsäure-(ester)-chlorides in einem Zweiphasensystem aus der wäßrigen Lösung einer anorganischen Base und einem leichtflüchtigen, inerten, wenig wasserlöslichem Lösemittel als organischer Phase. Die Ausbeute dieser Reaktion kann durch Mitverwendung katalytischer Mengen von tertiären Aminen und/oder quartären Ammonium- bzw. Phosphoniumsalzen mit mindestens 9 C-Atomen verbessert werden. Das tertiäre Amin setzt man vorzugsweise in Mengen von 1 bis 10 Mol-%, bezogen auf Thionophosphat, als Katalysator ein, während von den quartären Ammonium- bzw. Phosphoniumsalzen 0,01 bis 1 Mol-% ausreichend sind.

Geeignete organische Lösungsmittel sind Halogenkohlenwasserstoffe wie Methylenchlorid, Chloroform, Tetrachlorkohlenwasserstoff, Dichlorethan, Trichlorethylen, Tetrachlorethylen, Chlorbenzol und Dichlorbenzol; Kohlenwasserstoffe wie Benzol, Toluol, Xylol und Verschnitte hiervon mit aliphatischen Kohlenwasserstoffen; Ether wie Diethylether, Dipropylether, Dibutylether; Ketone wie Methylpropylketone, Methylbutylketon, Methylisobutylketon und Ester wie Essigsäureethylester, Essigsäurepropylester, Essigsäurebutylester, Propionsäureethylester, Propionsäurebutylester.

Eine Auswahl geeigneter Katalysatoren für das erfindungsgemäß Verfahren ist nachstehend aufgeführt:

Benzyldimethylamin, Dibenzylmethylamin, Benzyldiethylamin, Benzyl-di-(2-cyanoethyl)-amin, Tributylamin, Tris-2-Ethylhexylamin, Stearyldimethylamin, Tetrabutylammoniumchlorid, Tricaprylmethylammoniumchlorid, Tris-2-ethylhexyl-methylammoniumchlorid, Trioctylmethyl-ammoniumchlorid, Trimethylphenylammoniumchlorid, Trimethylbenzylammoniumchlorid, Triethylbenzylammoniumchlorid, Trimethylbenzylammoniumhydroxid, Benzyldodecyldimethylammoniumchlorid, Stearyltrimethylammoniumchlorid, Lauryltrimethylammoniumchlorid, Myristyltrimethylammoniumchlorid, Tetrabutylphosphoniumchlorid, Triphenylmethylphosphoniumbromid. Als anorganische Basen dienen vorzugsweise wasserlösliche Alkali- bzw. Erdalkalihydroxide und -carbonate wie Natriumhydroxid, Kaliumhydroxid, Bariumhydroxid, Natriumbicarbonat, Natriumcarbonat und Kaliumcarbonat. Auch wenig wasserlösliche Erdalkalibasen wie Magnesiumcarbonat, Magnesiumoxid, Calciumoxid, Calciumcarbonat, Bariumoxid und Bariumcarbonat können verwendet werden, sie werden jedoch vorteilhaft zusammen mit Propargylalkohol, Wasser und Katalysator im Reaktionsgefäß vorgelegt und aufgeschlämmt.

In einem weiteren bevorzugten Herstellungsverfahren für die Verbindungen der allgemeinen Formel II setzt man das entsprechende Thionophosphorsäure-(ester)-chlorid mit überschüssigem Propargylalkohol in Gegenwart fester anorganischer Basen in Abwesenheit von Wasser um. Geeignete anorganische Basen sind oben genannt. Das Reaktionswasser kann bei diesem Verfahren entweder im Ansatz verbleiben oder aber zusammen mit einem Teil des überschüssigen Propargylalkohols abdestilliert werden. Unter Umständen kann es vorteilhaft sein, in Gegenwart eines organischen Verdünnungsmittels zu arbeiten. Verwendet man

ein Lösungsmittel, welches mit Wasser ein azeotrop siedendes Gemisch bildet, so kann man durch Destillation unter Verwendung eines Wasserabscheiders das Reaktionswasser laufend aus dem Gemisch entfernen. Geeignete organische Lösemittel in diesem Sinne sind beispielsweise Methylenchlorid, Chloroform, Tetrachlorkohlenstoff, Dichlorethan, Trichlorethylen, Benzol, Toluol, Xylol oder Chlorbenzol.

Bevorzugt als Synergisten der allgemeinen Formel II werden Verbindungen verwendet, in denen X und Y Sauerstoff bedeuten, A für den Propargylrest und B für einen $C_{1-4}$-Alkyl- oder Alkenylrest steht.

Als besonders vorteilhaft zu verwendende Synergisten der Formel II seien beispielsweise genannt:

Thionophosphorsäure-O,O-dimethyl-O-propargylester
Thionophosphorsäure-O,O-diethyl-O-propargylester
Thionophsophorsäure-O,O-dipropyl-O-propargylester
Thionophosphorsäure-O,O-diisopropyl-O-propargylester
Thionophosphorsäure-O,O-dibutyl-O-propargylester
Thionophosphorsäure-O,O-diisobutyl-O-propargylester
Thionophosphorsäure-O,O-di-2-butyl-O-propargylester
Thionophosphorsäure-O-methyl-O,O-dipropargylester
Thionophosphorsäure-O-ethyl-dipropargylester
Thionophosphorsäure-O-propyl-dipropargylester
Thionophosphorsäure-O-isopropyl-dipropargylester
Thionophosphorsäure-O-butyl-dipropargylester
Thionophosphorsäure-O-isobutyl-dipropargylester

Thionophosphorsäure-O-2-butyl-dipropargylester
Thionophosphorsäure-tripropargylester
Thiothionophosphorsäure-S-methyl-O,O-dipropargylester
Thiothionophosphorsäure-S-ethyl-O,O-dipropargylester
Thiothionophosphorsäure-S-propyl-O,O-dipropargylester
Thiothionophosphorsäure-S-butyl-O,O-dipropargylester.

Zu den als Mischkomponenten zu verwendenden Carbamaten (Gruppe A) der Formel (III) gehören:

2-Methylphenyl-, 2-Ethylphenyl-, 2-n-Propylphenyl-, 2-Methoxyphenyl-, 2-Ethoxyphenyl-, 2-n- oder -iso-Propoxyphenyl-, 4-Methyl-phenyl-, 4-Ethylphenyl-, 4-n-Propylphenyl-, 4-Methoxy-phenyl-, 4-Ethoxyphenyl-, 4-n-Propoxyphenyl-, 2-Allalphenyl-, 2-(1-Methylallyl)-phenyl-, 3-iso-Propyl-4-methoxyphenyl-, 3,4,5-Trimethylphenyl-, 2,3-Dihydro-2,2-dimethylbenzufuran(7)-yl-, 2-/1,3-Dioxolan(2)yl-phenyl7-, 2,2-Dimethyl-1,3-benzodioxol(4)yl-, 2,2-Dimethyl- bzw. 1-Methyl-2,3-dihydro-benzofuran (4) yl-N-Methyl-carbamat, die entsprechenden -N-methyl-N-acetyl-, -N-methyl-N-trifluormethylthio-, -N-methyl-N-dichlormonofluormethylthio- bzw. -N-methyl-N-dimethylamino-thio-carbamate.

Diese Verbindungen, ihre Herstellung und ihre Verwendung sind bekannt (vergleiche z.B. US-Patentschriften 3 009 855; 2 903 478 und 3 111 539).

Zu den weiterhin als Mischungskomponenten gegebenenfalls zu verwendenden Carbonsäureestern (Gruppe B) der Formel (IV) gehören:

Essigsäure-(2,2,2-trichlor-1-(3,4-dichlor-phenyl)-ethyl)-ester, 2,2-Dimethyl-3-(2-methyl-propen-1-yl)-cyclopropan-carbonsäure-(2,3,4,5-tetrahydro-phthalimido-methyl)-ester, 2,2-Dimethyl-3-(2,2-dichlor-vinyl)-cyclopropancarbonsäure-(3-phenoxy-benzyl)-ester, 2,2-Dimethyl-3-(2,2-dichlorvinyl)-cyclopropan-carbonsäure-(α-cyano-4-fluor-3-phenoxy-benzyl)-ester, 2,2-Dimethyl-3-(2,2-dichlor-vinyl)-cyclopropancarbonsäure-(pentafluor-benzyl)-ester, 2,2-Dimethyl-3-(2,2-dibrom-vinyl)-cyclopropan-carbonsäure-(α-cyano-3-phenoxy-benzyl)-ester, 3-Methyl-2-(4-chlor-phenyl)-butansäure-(α-cyano-3-phenoxy-benzyl)-ester und 2,2-dimethyl-3-(2,2-dichlorvinyl)-cyclopropancarbonsäure-α-cyano-(4-fluor-3-phenoxy)-benzylester.

Die aufgezählten Verbindungen sind bekannt und größtenteils allgemein bekannte Handelsprodukte (vergleiche R. Wegler "Chemie der Pflanzenschutz- und Schädlingsbekämpfungsmittel" Band 1, Seiten 87-118, Heidelberg (1970).

Zu den weiterhin als Mischungskomponenten gegebenenfalls zu verwendenden Phosphorsäureestern (Gruppe C) der Formel (V) gehören:

O,O-Dimethyl- bzw. O,O-Diethyl-O-(2,2-dichlor- bzw. 2,2-dibromvinyl)-phosphorsäureester oder -thionophosphorsäureester und O,O-Dimethyl- bzw. O,O-Diethyl-O-(3-methyl-4-methylthiophenyl)-phosphor- bzw. -thionophosphorsäureester.

Die Verbindungen der Formel (IV) sind bekannt und nach literaturbekannten Verfahren gut zugänglich (vergleiche z.B. US-Patentschrift 2 956 073, Deutsche Auslegeschrift 1 167 324, Belgische Patentschrift 633 478).

Zu den weiterhin als Mischungskomponenten gegebenenfalls zu verwendeten Cycloalkanen (Gruppe D) der Formel (VI) gehört:

1,2,3,4,5,6-Hexachlorcyclohexan. Diese Verbindung, ihre Herstellung und ihre Verwendung ist bekannt (vergleiche z.B. US-P 2 502 258; Chem. + Industry, 1945, S. 314).

Zu den weiterhin als Mischungskomponenten gegebenenfalls zu verwendenden Halogenalkanen (Gruppe E) der Formel (VII) gehören:

1,1-Trichlor-2,2-bis-(4-chlor- bzw. 4-methoxyphenyl)-ethan,
1,1-Trichlor-2,2-bis-(4-chlorphenyl)-2-hydroxy-ethan
und
1,1-Dichlor-2,2-bis-(4-ethylphenyl)-ethan.

Diese Verbindungen, ihre Herstellung und ihre Verwendung sind bekannt (vergleiche z.B. US-PSen 2 420 928, 2 464 600, 2 883 428).

Wie bereits erwähnt, zeigen die neuen Wirkstoffkombinationen der erfindungsgemäß verwendbaren Phosphorester der Formel (II) mit Carbamaten, Carbonsäureestern, Phosphorsäureestern, Halogencycloalkanen und Halogenalkanen eine hervorragende Wirkungssteigerung gegenüber den Einzelwirkstoffen bzw. gegenüber deren Summe.

Die Gewichtsverhältnisse der Wirkstoffgruppen können dabei in relativ großen Bereichen schwanken. Im allgemeinen werden die als Synergisten verwendeten phosphorhaltigen Verbindungen mit den übrigen Wirkstoffen im Verhältnis 0,1:10 bis 10:0,1 eingesetzt. Besonders vorteilhaft

Sind jedoch Mischungsverhältnisse von 0,5:1,0 bis 1,0:1,0. Die erfindungsgemäßen Wirkstoffkombinationen bewirken nicht nur eine schnelle knock-down-Wirkung, sondern bewirken auch die nachhaltige Abtötung der tierischen Schädlinge, insbesondere von Insekten und Milben, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam.

Zu den oben erwähnten Schädlingen gehören:

Aus der Ordnung der Isopoda z.B. Oniscuc asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucopheae maderae, Blatella germanica, Aceta demoesticus, Gryllotalpa spp., Locusta migratoria migratorioides, Melanoplus differentialis, Schistocerca gregaria.

Aus der Ordnung der Dermaptera z.B. Forficula auricularia.
Aus der Ordnung der Isoptera z.B. Reticulitermes spp.,
Aus der Ordnung der Anoplura z.B. Phyllocera vastatrix, Pemphigus spp., Pediculus humanus corporis, Haematopinus

spo., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes Brassicae, Bemisda tabaci, Trialeurodes vaporariurum, Aphis gossypii, Brevicornyne brassicae, Cryptomyzus ribis, Doralis fabae, Doralis pomi, eriosoma lanigerum, Hyalopterus, arundinis, Macorsiphum avenae, Myzus spp., Phorodon humuli, Rhopalosiphum padi, Empoasca spp., Euscelis bilobatus, Nephtettix cincticeps, Lecanium corni, Saissetia oleae, Laodelphax striatellus, Nilaparvata lugens, Aonidiella auroantii, Aspidiotus hederae, Pseudococcus spp., Psylla spp.
Aus der Ordnung der Lepidoptera z.B. Pectinophora gossypiella, Budalus piniarius, Cheimatobia brumata, Lithocolletis blancarcella, Hyponomeuta padella, Plutella maculipennis, Malacosoma neutria, Euproctis chrysorrhoea, Lymantria spp. Bucculatrix thurberiella, Phillocnistis citrella, Agrotis sppl., Euxoa spp., Feltia spp., Earias insulana, Heliothis spp., Laphygma exigua, Mamestra brassicae, Panolis flammea, Prodonia litura, Spodoptera spp., Trichoplusia ni, Carpocapsa pomonella, Pieris sp., Chilo spp., Pyrausta nublilalis, Ephestia kuehniella, Calleria mellonella, Cacoecia podana, Capua reticulana, Chroistoneura fumiferana, Cluysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postuca, Dermestes spp., Trogoderma spp., Anthrenus spp., Attagenus spp., Lyctus spp., Meligethes aeneus, Ptinus spp., Niptus hololeucus, Gibbium psylloides Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp, C terebra spp., Gastrophilus spp., Hyppobosca spp., Stomocxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa. Aus der Ordnung der Siphonaptera z.B. Xenopsylla cheopis, Ceratophyllus spp.

Aus der Ordnung der Arachnida z.B. Scorpio maurus, Laurodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp.,

Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp.,

Die Wirkstoffkombinationen können in die üblichen Formulierungen übergeführt werden, wie Lösungen, Emulsionen, Spritzpulver, Suspensionen, Pulver, Stäubemittel, Schäume, Pasten, lösliche Pulver, Granulate, Aerosole, Suspensions-Emulsionskonzentrate. Saatgutpulver, Wirkstoffimprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä. sowie ULV-Kalt- und Wärmenebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel als Hilfslösungsmittel verwendet werden. Als flüssige Lösungsmittel kommen im wesentlichen in Frage: Aromaten, wie Xylol, Toluol, oder Alkylnaphaline, chlorierte Aromaten oder chlorierte aliphatische Kohlenwasserstoffe, wie Chlorethylene oder Methylenchlorid, aliphatische Kohlenwasserstoffe, wie Cyclohexan oder

Parafine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe: natürliche Gesteinsmehle, wie Kaoline, Tonerde, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel: nicht-ionogene und anionische Emulgatoren, wie Polyoxyethylen-Fettsäure-Ester, Polyoxy-ethylen-Fettalkohol-Ether, z.B. Alkylaryl-polyglykol-ether, Alkylsulfonate, Alkylsulfate, Arylsulfonate sowie Eiweißhydrolysate; als Dispergiermittel: z.B. Lignin, Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo-Metallphthalocyaninfarbstoffe und Spurennährstoffe wie Salze von Eisen, Mangan, Bor, Kuper, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 %.

Die Anwendung der erfindungsgemäßen Wirkstoffkombinationen erfolgt in Form ihrer handelsüblichen Formulierung und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsform kann von 0,0000001 bis zu 100 Gew.-% Wirkstoff, vorzugsweise zwischen 0,01 und 10 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffkombinationen durch eine hervoragende Residualwirkung auf Holz und Ton sowie durch eine gute Alkalistabilität auf gekälkten Unterlagen aus.

## Beispiele

Synergist 1: Thionophosphorsäure-ethyl-dipropargylester

2,5 Mol Propargylalkohol, 0,25 g Tricaprylmethylammoniumchlorid und 250 ml Toluol werden in einem Reaktionsgefäß vorgelegt. Bei 50°C läßt man innerhalb von 6 Std. gleichzeitig eine Lösung von 1,0 Mol Thionophosphorsäure-O-ethylester-dichlorid in 200 ml Toluol und 2,2 Mol Natronlauge als 50 %ige wäßrige Lösung zulaufen.

Nach 15 bis 20 Std. Reaktionszeit bei 50°C ist die Umsetzung beendet. Man verdünnt mit Wasser, bis alles NaCl gelöst ist, trennt die Phasen und wäscht die Toluolphase mehrfach mit verdünnter Sodalösung und Wasser. Die Toluollösung wird nun intensiv über $CaCl_2$ getrocknet, abfiltriert und eingeengt.

Ausbeute: 81 % (nach GC)
KP. : 105°C/0,05 mm
$n_D^{20}$ : 1,4890
Reinheit nach GC: 97 %

Man wiederholt die Herstellung von Synergist 1 unter den gleichen Bedingungen, jedoch ohne Verwendung von Tricaprylmethylammoniumchlorid.
Ausbeute: 74 % (nach GC)

Synergist 2: Thionophosphorsäure-O-propargyl-O,O-diethylester

Ein Gemisch aus 1,25 Mol Propargylalkohol, 250 ml absolutem Toluol und 1,1 Mol Pyridin wird bei 80°C innerhalb von 2 Std. mit 1,0 Mol Thionophosphorsäurediethylesterchlorid versetzt. Man läßt 1 Std. reagieren. Die Mischung wird mit Wasser versetzt, die untere wäßrige Phase wird mit 160 ml Methylenchlorid extrahiert. Die vereinigten organischen Phasen werden mit Natriumbicarbonatlösung neutral gewaschen und eingeengt. Nach der fraktionierten Destillation erhält man:

| | |
|---|---|
| Ausbeute: | 45 % |
| Kp: | 54°C/0,2 mbar |
| $n_D^{20}$: | 1,4692 |
| Gehalt: | 96,1 % (nach GC) |

Das Produkt enthält nach IR- und NMR-Spektrum keinen Phosphorsäurethiolester.

Synergist 3: Thionophosphorsäure-O-methyl-O,O-dipropargylester

In einem Rundkolben werden 4,4 Mol Propargylalkohol in 400 ml Toluol zusammen mit 0,25 g Tricaprylmethylammoniumchlorid auf 50°C erwärmt. Innerhalb von 60 Min. tropft man bei 50°C gleichzeitig eine Lösung von 1,0 Mol Thionophosphorsäure-O-methylesterdichlorid in 150 ml Toluol sowie 2,2 Mol 50 %ige Natronlauge hinzu. Die Reaktion ist exotherm, die Temperatur steigt

auf ca. 60°C an. Man rührt 10 Std. bei 50°C und saugt vom ausgeschiedenen Salz ab. Die organische Phase des Filtrats wird mit 200 ml Wasser gewaschen und eingeengt. Man erhält 191 g Rohprodukt, welches im Vakuum fraktioniert destilliert wird.

| | |
|---|---|
| Kp: | 65 - 68°C/0,04 mbar |
| Ausbeute: | 72 % |
| $n_D^{20}$: | 1,4942 |
| Reinheit: | 98,6 % (nach GC) |

| Analyse: | % C | % H | % S | % P |
|---|---|---|---|---|
| Berechnet | 41,2 | 4,4 | 15,7 | 15,2 |
| Gefunden | 41,4 | 4,5 | 15,5 | 15,5 |

Wiederholt man die gleiche Reaktion ohne Zusatz von Tricaprylmethylammoniumchlorid als Phasentransferkatalysator, so erhält man 66,5 % Ausbeute.

Synergist 4: Thionophosphorsäure-O,O,O-tripropargylester

In einem Rundkolben erhitzt man unter Rühren ein Gemisch aus 7,5 Mol Propargylalkohol, 400 ml Chloroform und 3,75 Mol wasserfreiem Kaliumcarbonat auf 60°C. Innerhalb von 2 Std. läßt man eine Lösung von 1 Mol Thiophosphorylchlorid in 150 ml Chlcroform bei 60°C zutropfen. Das Reaktionswasser destilliert dabei im Azeotrop mit dem Chloroform ab und wird in einem Wasserabscheider abgetrennt, das Chloroformkondensat wird in den Kolben zurückgeführt. Nach 24 Std. ist die Reaktion beendet. Man filtriert vom Salz ab und engt das Filtrat

im Vakuum ein. Niedrigsiedende Anteile werden in einem Dünnschichtverdampfer im Vakuum abdestilliert, in einem zweiten Schritt wird das Produkt durch Dünnschichtdestillation bei 120°C Heizmitteltemperatur und 0,1 mbar Druck gereinigt.

| | |
|---|---|
| Ausbeute: | 51 % |
| $n_D^{20}$: | 1,5030 |
| Reinheit: | 91 % (das Produkt zersetzt sich sehr leicht beim Gaschromatografieren) |

| Analyse: | % C | % H | % S | % P |
|---|---|---|---|---|
| Berechnet | 47,4 | 4,0 | 14,0 | 13,6 |
| Gefunden | 46,9 | 4,3 | 13,7 | 13,2 |

Nach der NMR-Analyse enthält das Produkt ca. 6 Mol-% des Propargylthiolesters $HC\equiv C-CH_2-S-\overset{O}{\overset{\|}{P}}(OCH_2-C\equiv CH)_2$

Spektroskopische Daten:

| | |
|---|---|
| $>\overset{S}{\overset{\|}{P}}-OCH_2-$ | $\delta$ = 4,73 ppm (dd) |
| $>\overset{S}{\overset{\|}{P}}-O-C-C\equiv CH$ | $\delta$ = 2,73 ppm (t) |
| $O=\overset{\mid}{\underset{\mid}{P}}-S-CH_2-$ | $\delta$ = 4,4 ppm (dd) |
| $O=\overset{\mid}{\underset{\mid}{P}}-S-C-C\equiv CH$ | $\delta$ = 2,50 ppm (t) |

Beispiel A

$LT_{100}$-Test

Testtiere: Musca domestica, Stamm Weymanns (♀♀), multiresistent.

Lösungsmittel: Aceton

Von den Wirkstoffen, Synergisten und Gemischen aus Wirkstoffen und Synergisten werden Lösungen hergestellt und 2,5 ml davon in Petrischalen auf Filterpapierscheiben von 9,5 cm Durchmesser pipetiert. Das Filterpapier saugt die Lösungen auf. Die Petrischalen bleiben so lange offen stehen, bis das Lösungsmittel vollständig verdunstet ist. Anschließend gibt man 25 Testtiere in die Petrischalen und bedeckt sie mit einem Glasdeckel.

Der Zustand der Testtiere wird bis zu 6 Stunden laufend kontrolliert. Es wird diejenige Zeit ermittelt, die für eine 100 %ige knock down-Wirkung erforderlich ist. Wird die $LT_{100}$ nach 6 Stunden nicht erreicht, wird der %-Satz der knock down gegangenen Testtiere festgestellt.

Konzentrationen der Wirkstoffe, Synergisten und Gemische und ihre Wirkungen gehen aus der nachfolgenden Tabelle hervor.

Tabelle

LT 100-Test mit einem multiresistenten Fliegenstamm
(Musca domestica, Stamm Weymanns ♀♀)

| Wirkstoff () Kennbuchstabe | bzw. Synergist () Beispiel-Nr. | Konzentrationen in % Wirkstoff | Synergist | LT 100 nach Minuten |
|---|---|---|---|---|
| 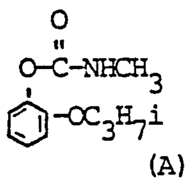 (A) | | 1,0 | | 360' = 25 % |
| 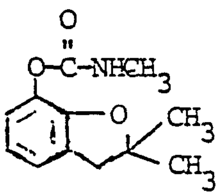 (B) | | 1,0 | | 360' = 65 % |
| 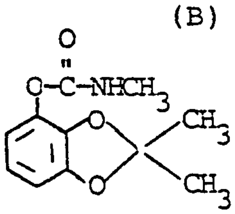 (C) | | 1,0 | | 360' = 75 % |
| Pyrethrumextrakt 25 %ig (D) | | 0,04 | | 360' = 95 % |
| 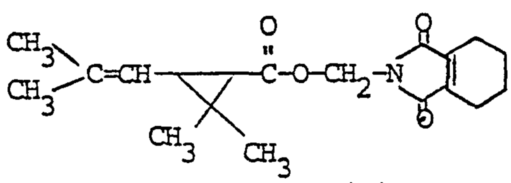 (E) | | 0,04 | | 360' = 95 % |
| 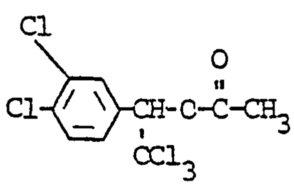 (F) | | 1,0 | | 360' = 75 % |

| Wirkstoff () Kennbuchstabe | bzw. Synergist () Beispiel-Nr. | Konzentrationen in % Wirkstoff | Synergist | LT 100 nach Minuten |
|---|---|---|---|---|
| (α) | $HC\equiv C-CH_2-O-\overset{O}{\overset{\|}{P}}-(OC_2H_5)_2$ (bekannt) | | 0,2 | 360' = 0 % |
| (β) | 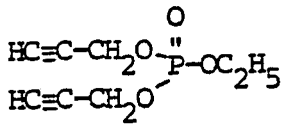 (bekannt) | | 0,2 | 360' = 0 % |
| (1) | $HC\equiv C-CH_2O-\overset{S}{\overset{\|}{P}}-(OC_2H_5)_2$ (erfindungsgemäß) | | 0,2 | 360' = 0 % |
| (2) | 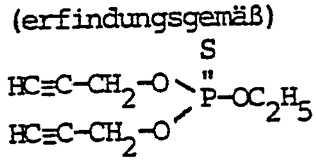 (erfindungsgemäß) | | 0,2 | 360' = 10 % |
| (3) | $(HC\equiv C-CH_2-O)_2\overset{S}{\overset{\|}{P}}-OCH_3$ (erfindungsgemäß) | | 0,2 | 360' = 50 % |
| (4) | $(HC\equiv CCH_2-O)_3P=S$ | | 1,0 | 360' = 0 % |
| A | + β (bekannt) | 0,2 + | 0,2 | 90' |
| A | + 2 | 0,2 + | 0,2 | 60' |
| B | + α (bekannt) | 0,04 + | 0,04 | 150' |
| B | + 1 | 0,04 + | 0,04 | 105' |
| B | + β (bekannt) | 0,04 + | 0,04 | 180' |
| B | + 2 | 0,04 + | 0,04 | 105' |
| C | + α (bekannt) | 0,008 + | 0,008 | 360' = 50 % |
| C | + 1 | 0,008 + | 0,008 | 360' |
| C | + β (bekannt) | 0,04 + | 0,04 | 150' |
| C | + 2 | 0,04 + | 0,04 | 120' |
| D | + β (bekannt) | 0,04 + | 0,04 | 150' |
| D | + 2 | 0,04 + | 0,04 | 120' |
| F | + 3 | 0,2 + | 0,2 | 210' |
| F | + 4 | 0,2 + | 0,2 | 210' |

| Wirkstoff () Kennbuchstabe | | bzw. Synergist () Beispiel-Nr. | | Konzentrationen in % Wirkstoff | | Synergist | LT 100 nach Minuten |
|---|---|---|---|---|---|---|---|
| E | + | 1 (bekannt) | α | 0,04 | + | 0,04 | 150' |
| E | + | 3 | | 0,04 | + | 0,04 | 120' |
| E | + | 2 (bekannt) | β | 0,04 | + | 0,04 | 120' |
| E | + | 4 | | 0,04 | + | 0,04 | 90' |
| F | + | 1 (bekannt) | α | 0,2 | + | 0,2 | 360' = 95 % |
| F | + | 3 | | 0,2 | + | 0,2 | 240' |
| F | + | 2 (bekannt) | β | 0,2 | + | 0,2 | 360' |
| F | + | 4 | | 0,2 | + | 0,2 | 210' |

Patentansprüche

1. Insektizide und akarizide Mittel, gekennzeichnet durch einen Gehalt an einer Wirkstoffkombination bestehend aus phosphorhaltigen Verbindungen der allgemeinen Formel II

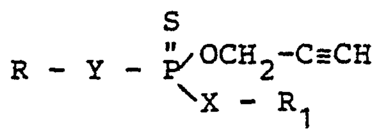

II

in welcher

R und $R_1$ unabhängig voneinander für die Reste Alkyl, Alkenyl- oder Alkinyl mit 1 bis 4 C-Atomen stehen, sowie

X und Y unabhängig voneinander für Sauerstoff oder Schwefel stehen;

und

A. Carbamaten und/oder
B. Carbonsäureestern, einschließlich der natürlichen sowie synthetischen Pyrethroiden und/oder
C. Phosphorsäureestern und/oder
D. Halogencycloalkanen und/oder
E. Halogenalkanen.

2. Insektizide und akarizide Mittel gemäß Anspruch 1, dadurch gekennzeichnet, daß in der Wirkstoffkombination das Gewichtsverhältnis von phosphorhaltigen Verbindungen zu Wirkstoffen zwischen 0,1 : 10 und 10 : 0,1 liegt.

3. Insektizide und akarizide Mittel gemäß Anspruch 1 und 2, dadurch gekennzeichnet, daß in der allgemeinen Formel II X und Y für Sauerstoff, R für den Propargylrest und $R_1$ für einen $C_{1-4}$-Alkylrest steht.

4. Verfahren zur Bekämpfung von Insekten und Spinntieren, dadurch gekennzeichnet, daß man eine Wirkstoffkombination gemäß Anspruch 1, 2 oder 3 auf Insekten und Spinntiere und/oder ihren Lebensraum einwirken läßt.

5. Verwendung von Wirkstoffkombinationen gemäß Anspruch 1,2 oder 3 zur Bekämpfung von Insekten und Spinnentieren.

6. Verfahren zur Herstellung von insektiziden und akariziden Mitteln, dadurch gekennzeichnet, daß man eine Wirkstoffkombination gemäß Anspruch 1, 2 oder 3 mit Streckmitteln und/oder oberflächenaktiven Mitteln vermischt.

7. Propargylgruppenhaltige Thionophosphorsäureester der allgemeinen Formel II, in der X und Y für Sauerstoff stehen, R einen $C_1$-$C_4$-Alkylrest und $R_1$ den Propargylrest bedeuten.

8. Propargylgruppenhaltige Thionophosphorsäureester der allgemeinen Formel II, in der X und Y für Sauerstoff stehen, sowie R und $R_1$ einen $C_1$-$C_4$-Alkylrest bedeuten.

9. Propargylgruppenhaltigen Thionophosphorsäureester der allgemeinen Formel II, in der X und Y für Sauerstoff sowie R und $R_1$ für den Propargylrest stehen.

10. Verfahren zur Herstellung von propargylgruppenhaltigen Thionophosphorsäureestern der allgemeinen Formel II, dadurch gekennzeichnet, daß man das betreffende Thionophosphorsäurechlorid mit mindestens der äquivalenten Menge Propargylalkohol in Gegenwart einer anorganischen Base, vorzugsweise Kaliumcarbonat oder Natriumcarbonat, in mindestens äquivalenter Menge als Säurefänger umsetzt.

11. Verfahren zur Herstellung von propargylgruppenhaltigen Thionophosphorsäureestern der allgemeinen Formel II gemäß Ansprch 10, dadurch gekennzeichnet, daß man in einem Zweiphasensystem in Gegenwart einer anorganischen Base, vorzugsweise Natronlauge, arbeitet.

12. Verfahren zur Herstellung von propargylgruppenhaltigen Thionophosphorsäureestern der allgemeinen Formel II gemäß Anspruch 11, dadurch gekennzeichnet, daß man die Reaktion in einem Zweiphasensystem unter Verwendung von 0,001 bis 100 Mol-%, bezogen auf Phosphor, eines tertiären Amins, quartären Ammonium- oder Phosphoniumsalzes mit mindestens 9 C-Atomen als Katalysator umsetzt.

13. Verfahren nach Anspruch 11 und 12, dadurch gekennzeichnet, daß man Methylenchlorid, Chloroform, Tetrachlorkohlenstoff oder Toluol als Lösungsmittel verwendet.

14. Verfahren nach Anspruch 12 und 13, dadurch gekennzeichnet, daß man 0,01 bis 10 Mol-%, bezogen auf Phosphor, eines tertiären Amins, quartären Ammonium- oder Phosphoniumsalzes mit mindestens 9 C-Atomen als Katalysator verwendet.